# EUROPEAN PATENT SPECIFICATION

(11) **EP 3 760 536 B1**
(45) Date of publication and mention of the grant of the patent: **13.11.2024**
(21) Application number: 20184255.6
(22) Date of filing: 06.07.2020
(51) Int. Cl.: B64C 11/48, B64C 27/30, B64C 29/00, B64C 11/08

(54) **AERONAUTICAL PROPELLING DEVICE**
ANTRIEBSMASCHINE FÜR EIN LUFTFAHRZEUG
MOYEN DE PROPULSION AÉRONAUTIQUE

(30) Priority: 05.07.2019 IT 201900011040
(43) Date of publication of application: 06.01.2021
(73) Proprietor: Phase Motion Control S.p.A., 16154 Genova (IT); Becchi, Paolo, 17027 Pietra Ligure (SV) (IT)
(72) Inventor: Becchi, Paolo, 17027 Pietra Ligure (IT); Venturini, Marco, 16154 Genova (IT)
(74) Representative: Bottino, Giovanni

(56) References cited:
- FR-A1- 3 070 368
- US-A- 2 826 255
- US-A- 5 743 489
- US-A1- 2019 135 425
- US-B1- 9 334 049
- US-B1- 9 994 305

## Description

The present invention relates to an aeronautical propulsion device for an aircraft provided with carrier wings for cruise flight, which propulsion device comprises at least two coaxial propellers counter-rotating therebetween.

The invention is applicable to any type of aircraft and is particularly advantageously applied in vertical take-off aircraft. This specific technical field will be referred to directly, but not in a limited way, in the following description.

In recent years, many vertical take-off aircraft have been studied and developed to allow for the advancement of mobility in large metropolises and in areas without airports and other communication means.

In some cases the same engines are used both during take-off and for conventional flight where the weight of the aircraft is supported by the wing lift and the required thrust is significantly reduced.

In the first phase, for take-off and vertical flight, it is necessary to use propellers of large diameter and very small pitch, thus achieving high static thrusts. These propellers cannot be used for translated flight, as the blade pitch could generate resistance rather than thrust.

This is problematic in a vertical take-off aircraft commonly referred to as a tiltrotor, where the same propellers are used for both take-off and vertical flight and for cruise flight, by means of propeller axis tilting means. Depending on the type of these tilting means, tiltrotors are divided into three categories: a first category provides for the rotation of the entire aircraft and is therefore identified with the term "tailsitter"; a second category provides for the rotation of the engine unit only; a third category provides for the rotation of the aerodynamic surface to which the engine is connected.

In such aircraft, regardless of the category to which they belong, variable pitch propellers must be used, since the same propellers are used for both flight modes. However, this solution increases the complexity, cost and weight of the engines. In addition, even it the propellers designed for vertical take-off provide variable pitch control, they cannot be optimized for horizontal flight. This is because they have a completely incorrect pitch extension for cruise flight, which leads to very low yields. Document US9994305 B1 discloses a system with a first propeller attached to a driveshaft through a first one-way bearing for allowing rotation in first direction and resist rotation in second direction that is opposite the first direction and a second propeller attached to the driveshaft through a second one-way bearing for allowing rotation in the second direction and resists rotation in the first direction.

The present invention aims to overcome this limit of the currently known propulsion devices with a device as described at the beginning, in which said propellers further have a fixed and different pitch therebetween, having a first said propeller with a smaller pitch and having a second said propeller with a larger pitch.

In the case of vertical take-off aircraft, the first propeller may then be used to exert a thrust during take-off and vertical flight and the second propeller to exert a thrust during cruise flight and also during take-off and vertical flight.

In this way the first propeller has the pitch optimized for the take-off phase and for vertical flight while the second propeller has the pitch necessary for cruise flight. Both propellers are used during the take-off phase and, being counter-rotating, provide a much greater thrust than that of the first propeller alone. During translated flight, however, only the second propeller is used.

In the present invention, the first propeller is positioned in front with respect to the second propeller, in the forward direction of the aircraft.

This is particularly advantageous because the second propeller, having optimized pitch for cruise flight, operates more efficiently when it encounters moving air. In this way, therefore, the second propeller, when operational, always encounters moving air: in the take-off and vertical flight phase the air is moved by the first propeller, which precedes the second propeller; in the cruise flight phase, in which the first propeller is stopped, the air still has a relative speed due to the forward movement of the aircraft.

In one embodiment, the first propeller is provided with means for feathering the blades, i.e. oriented to lie on one or more planes parallel to the movement direction of the aircraft.

Such means may be of any currently known type and preferably are passive and such that they automatically allow for feathering during translated flight when the propeller is stopped. In this way the first propeller may be stopped in the initial cruise phase of the flight to allow the thrust of the second propeller only and may further be put in feathered position so as not to generate resistance.

According to the present invention, the device is provided with one or more electric motors to power the propellers. The propulsion device may then be advantageously used for electric air mobility, for example in passenger or cargo drones, reducing complexity, weight and costs.

In a first embodiment, the first propeller is driven by a first electric motor and the second propeller is driven by a second electric motor.

This allows the rotational speed and torque to the first and second propellers to be adjusted completely independently.

In addition, to stop the first propeller, it is sufficient to stop the relative first electric motor which drives it.

In a second embodiment, the propellers are driven by a single electric motor, the first propeller being connected to a first rotor of said electric motor and the second propeller being connected to a second rotor of said electric motor.

This second variant has the great advantage of providing a single electric motor in which, instead of having a rotor and a stator, where the rotor rotates within a stationary stator, the stator is used as a second rotor and rotates in the opposite direction to the first rotor.

According to a refinement, a brake is provided for stopping the first propeller.

In this way, at the beginning of the cruise flight phase it is possible to stop the first propeller, preferably in a desired position, bringing the relative rotor into stator condition and allowing only the rotor relative to the second propeller to move.

Both of the embodiments described above are particularly advantageous because they relate to a "fail-safe" configuration, in which each propeller may operate independently of the other. If one of the propellers stops accidentally, the other propeller is able to exert the necessary thrust for the two different flight phases, also for the flight phase for which it is not optimized.

In a further embodiment an outer propeller containment conduit is provided, normally referred to as an intubated propeller.

This improves performance and reduces noise. Such a conduit may be similar to that used in aircraft commonly referred to as "turbofan".

Alternatively, the propellers may be provided with the ends of the blades free in the air.

An object of the present invention is also an aircraft provided with carrier wings for cruise flight, comprising at least one propulsion device as described above.

In a preferred embodiment, the aircraft is of the vertical take-off type and may be provided with means for tilting the axis of rotation of said propellers from a vertical position for take-off and vertical flight to a horizontal or substantially horizontal position for cruise flight.

In an embodiment, at least one said propeller device is positioned behind a wing, the first propeller being provided with two blades and first propeller locking means being provided in a cruise condition, in which the blades of the first propeller are feathered and lie on the plane of the relative wing.

In this way, the first propeller is aligned and "hidden" behind the wing profile, and minimizes the aerodynamic resistance of the aircraft.

The invention also relates to a propulsion process according to claim 10.

In a preferred embodiment of the method, the aircraft is of the vertical take-off type and, prior to take-off, a positioning of the rotation axis of the propellers along a vertical direction is provided, and, after take-off, a tilting of the rotation axis of the propellers from a vertical position to a horizontal or substantially horizontal position is provided.

According to an embodiment of the procedure, after the first propeller is stopped, the blades of such first propeller are feathered.

These and other features and advantages of the present invention will become clearer from the following description of some non-limiting exemplary embodiments illustrated in the attached drawings in which:
fig. 1 shows a side/section view of a first embodiment variant of the device;
fig. 2 shows a side/section view of a second embodiment variant of the device;
fig. 3 shows a front view of a take-off and vertical flight configuration;
fig. 4 shows a front view of a cruise flight configuration;
fig. 5 shows a diagram of the process.

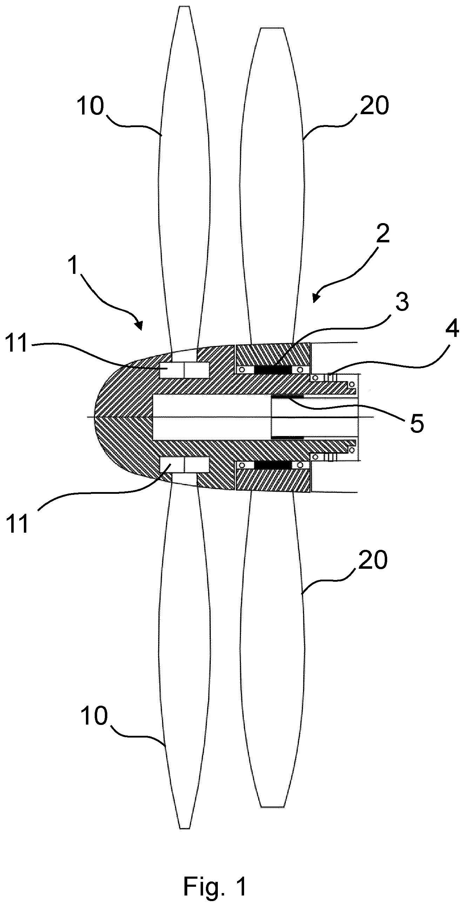

Figure 1 shows a first embodiment variant of the aeronautical propulsion device for a vertical take-off aircraft according to the present invention.

The propulsion device comprises at least two coaxial fixed pitch propellers counter-rotating therebetween, of which a first propeller 1 with smaller pitch to exert a thrust during take-off and vertical flight and a second propeller 2 with larger pitch to exert a thrust both during take-off and vertical flight and during cruise flight.

The aircraft is also provided with rotation axis tilting means of the propellers from a vertical position for take-off and vertical flight to a horizontal position for cruise flight. The tilting means are preferably of currently known type and are not illustrated in the figures.

The first propeller 1 is positioned in front of the second propeller 2, in the forward direction of the aircraft. The propellers 1 and 2 may have any number of blades 10 and 20. Preferably both the first propeller 1 and the second propeller 2 are each provided with a pair of first blades 10 and second blades 20 respectively, each pair of blades being arranged at 180° to each other. Compared to the second propeller 2, the first propeller 1 not only has a smaller pitch, optimized for vertical take-off, but also has a larger diameter, to ensure the necessary thrust.

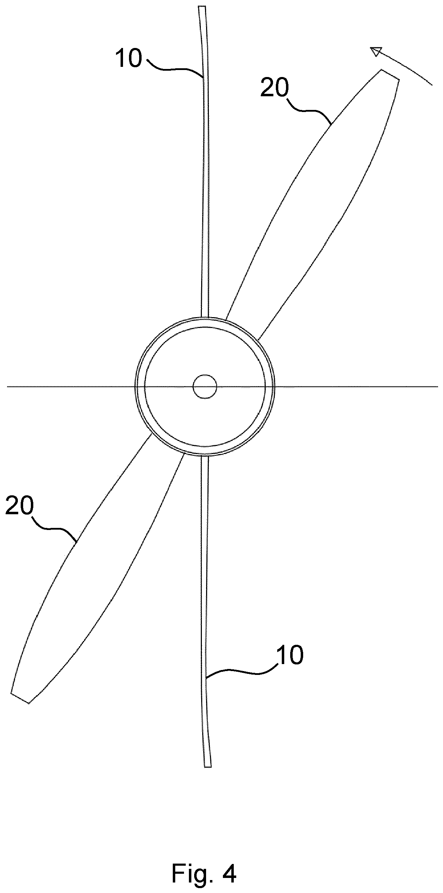

The first propeller 1 is provided with feathering means 11 of both the first blades 10. Such means 11 may be of any currently known type and preferably are passive and such that they automatically allow the feathering of the first blades 10 during translated flight when the first propeller 1 is stopped, as illustrated in figure 4.

In the embodiment variant of figure 1, the propellers 1 and 2 are driven by a single electric motor 3. The first propeller 1 is connected to a first rotor of the electric motor 3 and the second propeller 2 is connected to a second rotor of the electric motor 3. In this variant, since there are no static parts of the motor 3, it is necessary to provide a rotating manifold 4 for the power supply of the motor 3.

A brake 5 is also provided for stopping the first propeller 1, such that at the beginning of the cruise flight phase it is possible to stop the first propeller 1, bringing the relative rotor to stator condition and allowing only the rotor relative to the second propeller 2 to move.

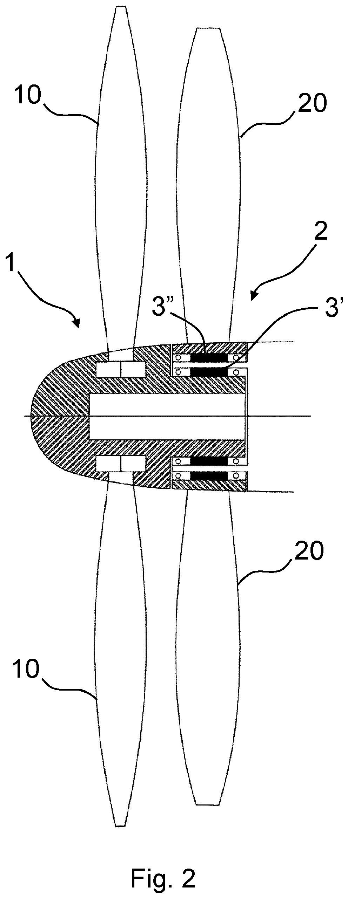

In the embodiment of figure 2 the first propeller 1 is driven by a first electric motor 3' and the second propeller 2 is driven by a second electric motor 3".

In this case, to stop the first propeller 1 it is sufficient to stop the relative first electric motor 3' which drives it. A first motor 3' of the type such that it is possible to stop the first propeller 1 at a desired position may be provided.

Figures 1 and 2 both illustrate a configuration with the propulsion device positioned in front of the wing of the aircraft along the forward direction. However, the device may be provided in other suitable positions on the aircraft, in particular also behind the wing. In the case of the propulsion device positioned behind of the wing, if the first propeller 1 is provided with two first blades 10 as in the figures, it is possible to provide for locking means of the first propeller 1 in a cruise condition, in which the first blades 10 of the first propeller 1 are feathered and lie on the plane of the relative wing. The locking means of the first propeller 1 may for example be formed by the brake 5 in the variant of figure 1. Alternatively, the locking means may be formed by the first motor 3' in the variant of figure 2.

The propellers 1 and 2 may be provided with the ends of the blades 10 and 20 free in the air or alternatively an outer propeller containment conduit 1 and 2, not illustrated in the figure, may be provided.

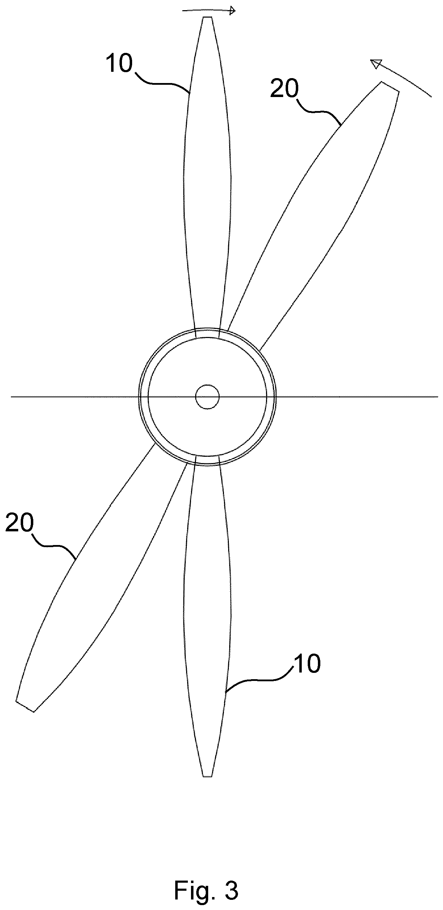

Figure 3 illustrates a front view of the device, in which the first propeller 1 and the second propeller 2 rotate in a reverse direction relative to each other, as indicated by the arrows. This operating arrangement corresponds to the take-off and vertical flight phase, in which both propellers 1 and 2 are operated.

In figure 4, instead, the first propeller 1 is stopped and placed with the first blades 10 in the feathered position. This further operating arrangement corresponds therefore to the cruise flight phase, in which the first propeller is stopped and only the second propeller 2 is operated.

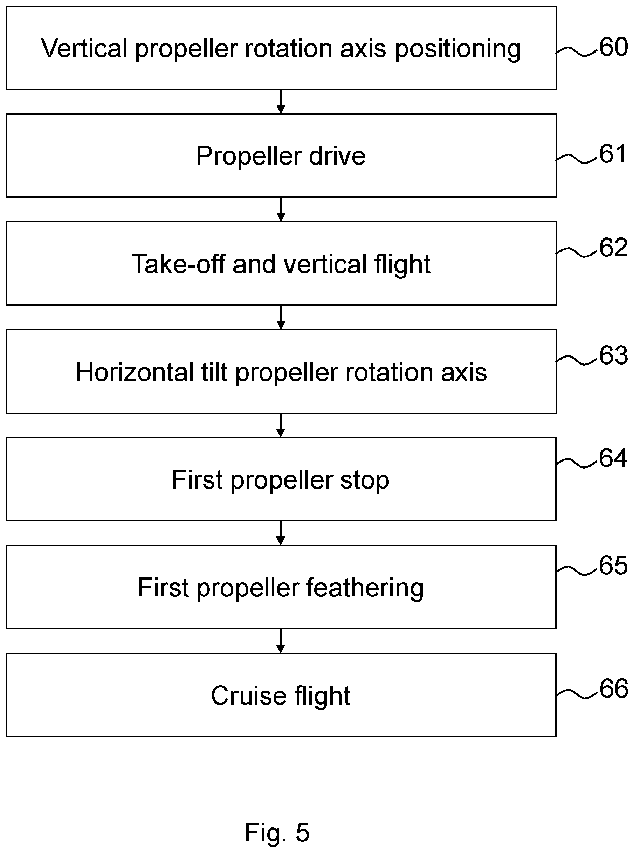

Figure 5 shows a diagram of the propulsion process of a vertical take-off aircraft object of the present invention.

The process uses the propulsion device described above and includes the following steps.

The propulsion device is initially positioned at step 60 in a position adapted to vertical take-off, i.e. with the rotation axis of the first propeller 1 and the second propeller 2 along a vertical direction.

Both propellers 1 and 2 are then driven in rotation in step 61 and, at the right thrust, this causes the aircraft to take off (step 62).

The propulsion device is then rotated at step 63, causing a tilting of the rotation axis of the propellers 1 and 2 from a vertical position to a horizontal position.

Then the first propeller 1 is stopped (step 64) and with the feathering of the first blades 10 of this first propeller 1 (step 65).

The aircraft can then proceed with cruise flight (step 66).

## Claims

1. An aeronautical propulsion device for an aircraft provided with carrier wings for cruise flight, the propulsion device comprising at least two coaxial propellers (1, 2), which propellers (1, 2) have a fixed and different pitch therebetween, having a first said propeller (1) smaller pitch and having a second said propeller (2) larger pitch, being the first propeller (1) placed in front of the second propeller (2), in the forward direction of the aircraft
**characterized in that**
said propellers are connected to one or more electric motors so as to be driven at least temporarily simultaneously in a counter-rotating way therebetween.

2. The device according to claim 1, wherein the first propeller (1) is provided with blade feathering means (10).

3. The device according to one or more of the preceding claims, wherein the propellers (1, 2) are connected to more electric motors (3', 3") and the first propeller (1) is driven by a first electric motor (3') and the second propeller (2) is driven by a second electric motor (3")

4. The device according to claim 1 or 2, wherein the propellers (1, 2) are connected to and driven by one single electric motor (3), the first propeller (1) being connected to a first rotor of said electric motor (3) and the second propeller (2) being connected to a second rotor of said electric motor (3).

5. The device according to claim 4, wherein a brake (5) is provided for stopping the first propeller (1).

6. The device according to one or more of the preceding claims, wherein an outer propeller containment conduit (1, 2) is provided.

7. An aircraft with carrier wings for cruise comprising at least one propulsion device according to one or more of the preceding claims.

8. The aircraft according to claim 7, wherein the aircraft is of the vertical take-off type and may be provided with rotation axis tilting means of said propellers (1, 2) from a vertical position for take-off and vertical flight to a horizontal position for cruise flight.

9. An aircraft according to claim 8, wherein at least one said propulsion device is positioned behind a wing, the first propeller (1) being provided with two blades (10) and being provided with locking means of the first propeller (1) in a cruise condition, wherein the blades (10) of the first propeller (1) are in the feathered position and lie on the plane of the relative wing.

10. A propulsion process of an aircraft with carrier wings for cruise flight, comprising:
the rotational operation (61) of at least two coaxial propellers (1, 2), having a first said propeller (1) smaller pitch and having a second said propeller (2) larger pitch, and
the take-off (62) of the aircraft in which said propellers (1, 2) are driven simultaneously in a counter-rotating way therebetween by one or more electric motors, and
subsequently the stop (64) of the first propeller (1) and the start of the cruise flight of the aircraft.

11. The process according to claim 10, wherein the aircraft is of the vertical take-off type and, prior to take-off, a positioning (60) of the rotation axis of the propellers (1, 2) along a vertical direction is provided, and, after take-off, a tilting (63) of the rotation axis of the propellers (1, 2) from a vertical position to a horizontal position is provided.

12. The process according to claim 10 or 11, wherein following the stop (64) of the first propeller (1), the blades (10) of such first propeller (1) are placed in the feathered position.

## Patentansprüche

1. Aeronautische Antriebsvorrichtung für ein Luftfahrzeug, das mit Trägerflügeln für den Reiseflug versehen ist, wobei die Antriebsvorrichtung mindestens zwei koaxiale Propeller (1, 2) umfasst, wobei die Propeller (1, 2) eine feste und unterschiedliche Steigung dazwischen aufweisen, eine erste kleinere Steigung des Propellers (1) und eine zweite größere Steigung des Propellers (2) aufweisen, wobei der erste Propeller (1) vor dem zweiten Propeller (2) in der Vorwärtsrichtung des Luftfahrzeugs platziert ist.
**dadurch gekennzeichnet, dass**
die Propeller mit einem oder mehreren Elektromotoren verbunden sind, um zumindest zeitweise gleichzeitig dazwischen gegenläufig angetrieben
zu werden.

2. Vorrichtung nach Anspruch 1, wobei der erste Propeller (1) mit Blatt-Anstellwinkelverstellung (10) versehen ist.

3. Vorrichtung nach einem oder mehreren der vorstehenden Ansprüche, wobei die Propeller (1, 2) mit mehreren Elektromotoren (3', 3") verbunden sind und der erste Propeller (1) von einem ersten Elektromotor (3') und der zweite Propeller (2) von einem zweiten Elektromotor (3") angetrieben ist.

4. Vorrichtung nach Anspruch 1 oder 2, wobei die Propeller (1, 2) mit einem einzigen Elektromotor (3) verbunden sind und von diesem angetrieben werden, wobei der erste Propeller (1) mit einem ersten Rotor des Elektromotors (3) und der zweite Propeller (2) mit einem zweiten Rotor des Elektromotors (3) verbunden ist.

5. Vorrichtung nach Anspruch 4, wobei eine Bremse (5) zum Anhalten des ersten Propellers (1) bereitgestellt ist.

6. Vorrichtung nach einem oder mehreren der vorstehenden Ansprüche, wobei eine äußere Propelleraufnahmeleitung (1, 2) bereitgestellt ist.

7. Luftfahrzeug mit Trägerflügeln für Reiseflug, das mindestens eine Antriebsvorrichtung nach einem oder mehreren der vorstehenden Ansprüche umfasst.

8. Luftfahrzeug nach Anspruch 7, wobei das Luftfahrzeug vom Senkrechtstartertyp ist und mit Drehachsenneigungsmitteln der Propeller (1, 2) aus einer vertikalen Position für den Start und den vertikalen Flug in eine horizontale Position für den Reiseflug versehen sein kann.

9. Luftfahrzeug nach Anspruch 8, wobei mindestens eine der Antriebsvorrichtungen hinter einem Flügel positioniert ist, wobei der erste Propeller (1) mit zwei Blättern (10) versehen ist und mit Verriegelungsmitteln des ersten Propellers (1) in einem Reiseflugzustand versehen ist, wobei die Blätter (10) des ersten Propellers (1) in der Anstellwinkelverstellungsposition sind und auf der Ebene des relativen Flügels liegen.

10. Antriebsprozess eines Luftfahrzeugs mit Trägerflügeln für Reiseflug, umfassend:
den Drehbetrieb (61) von mindestens zwei koaxialen Propellern (1, 2), die eine erste kleinere Steigung des Propellers (1) aufweisen und eine zweite größere Steigung des Propellers (2) aufweisen, und
den Start (62) des Luftfahrzeugs, wobei die Propeller (1, 2) von einem oder mehreren Elektromotoren gleichzeitig gegenläufig dazwischen angetrieben werden, und anschließend den Stopp (64) des ersten Propellers (1) und den Start des Reisefluges des Luftfahrzeugs.

11. Prozess nach Anspruch 10, wobei das Luftfahrzeug vom Senkrechtstartertyp ist und vor dem Start ein Positionieren (60) der Drehachse der Propeller (1, 2) entlang einer vertikalen Richtung vorgesehen ist, und nach dem Start eine Neigung (63) der Drehachse der Propeller (1, 2) von einer vertikalen Position in eine horizontale Position vorgesehen ist.

12. Prozess nach Anspruch 10 oder 11, wobei nach dem Stopp (64) des ersten Propellers (1) die Blätter (10) eines solchen ersten Propellers (1) in die Anstellwinkelverstellungsposition platziert werden.

## Revendications

1. Dispositif de propulsion aéronautique pour un aéronef muni d'ailes porteuses pour le vol de croisière, le dispositif de propulsion comprenant au moins deux hélices coaxiales (1, 2), lesquelles hélices (1, 2) ont un pas fixe et différent entre elles, ayant une première dite hélice (1) à pas plus petit et ayant une seconde dite hélice (2) à pas plus grand, étant la première hélice (1) placée devant la seconde hélice (2), dans la direction vers l'avant de l'aéronef
**caractérisé en ce que**
lesdites hélices sont reliées à un ou plusieurs moteurs électriques de manière à être entraînées au moins temporairement simultanément de manière contrarotative
entre eux.

2. Dispositif selon la revendication 1, dans lequel la première hélice (1) est pourvue de moyens de mise en drapeau de pale (10).

3. Dispositif selon une ou plusieurs des revendications précédentes, dans lequel les hélices (1, 2) sont reliées à plusieurs moteurs électriques (3', 3") et la première hélice (1) est entraînée par un premier moteur électrique (3') et la seconde hélice (2) est entraînée par un second moteur électrique (3")

4. Dispositif selon la revendication 1 ou 2, dans lequel les hélices (1, 2) sont reliées à et entraînées par un seul moteur électrique (3), la première hélice (1) étant reliée à un premier rotor dudit moteur électrique (3) et la seconde hélice (2) étant reliée à un second rotor dudit moteur électrique (3).

5. Dispositif selon la revendication 4, dans lequel un frein (5) est fourni
pour arrêter la première hélice (1).

6. Dispositif selon une ou plusieurs des revendications précédentes, dans lequel un conduit de confinement d'hélice externe (1, 2) est prévu.

7. Aéronef avec des ailes porteuses pour la croisière comprenant au moins un dispositif de propulsion selon l'une ou plusieurs des revendications précédentes.

8. Aéronef selon la revendication 7, dans lequel l'aéronef est du type à décollage vertical et peut être pourvu de moyens d'inclinaison de l'axe de rotation desdites hélices (1, 2) d'une position verticale pour le décollage et le vol vertical à une position horizontale pour le vol de croisière.

9. Aéronef selon la revendication 8, dans lequel au moins un dit dispositif de propulsion est positionné derrière une aile, la première hélice (1) étant pourvue de deux pales (10) et étant pourvue de moyens de verrouillage de la première hélice (1) dans un état de croisière, dans lequel les pales (10) de la première hélice (1) sont en position en drapeau et se trouvent sur le plan de l'aile relative.

10. Procédé de propulsion d'un aéronef avec des ailes porteuses pour un vol de croisière, comprenant :
le fonctionnement en rotation (61) d'au moins deux hélices coaxiales (1, 2), ayant un premier dit pas d'hélice (1) plus petit et ayant un second dit pas d'hélice (2) plus grand, et
le décollage (62) de l'aéronef dans lequel lesdites hélices (1, 2) sont entraînées simultanément de manière contrarotative entre elles par un ou plusieurs moteurs électriques, puis l'arrêt (64) de la première hélice (1) et le début du vol de croisière de l'aéronef.

11. Procédé selon la revendication 10, dans lequel l'aéronef est du type à décollage vertical et, avant le décollage, un positionnement (60) de l'axe de rotation des hélices (1, 2) le long d'une direction verticale est prévu, et, après le décollage, une inclinaison (63) de l'axe de rotation des hélices (1, 2) d'une position verticale à une position horizontale est prévue.

12. Procédé selon la revendication 10 ou 11, dans lequel après l'arrêt (64) de la première hélice (1), les pales (10) de cette première hélice (1) sont placées dans la position en drapeau.
